# EUROPEAN PATENT SPECIFICATION

(11) **EP 2 765 153 B1**
(45) Date of publication and mention of the grant of the patent: **29.03.2017**
(21) Application number: 13000800.6
(22) Date of filing: 15.02.2013
(51) Int. Cl.: C08J 3/09, C08L 33/00, C09J 133/00, C08K 5/00, C08K 3/40, C03C 8/16, C03C 8/02, C03C 8/24, C09J 133/10, H01M 4/90, H01M 8/02, C08L 33/10, C08K 13/02, C08J 3/11, H01M 2/08, H01M 8/10, H01M 8/24

(54) **SEALING GLASS COMPOSITION AND METHODS OF APPLYING IT**
DICHTUNGSGLASZUSAMMENSETZUNG UND VERFAHREN ZU IHRER VERWENDUNG
COMPOSITION DE VERRE DE SCELLEMENT ET MÉTHODES DE SON APPLICATION

(30) Priority: 12.02.2013 US 201361763874 P
(43) Date of publication of application: 13.08.2014
(73) Proprietor: Heraeus Precious Metals North America Conshohocken LLC, West Conshohocken, PA 19428 (US)
(72) Inventor: Samson, Shahbazi, Roslyn, PA 19001 (US); Grabey, Steven, Hazleton, PA 18201 (US); Challingsworth, Mark, Glenside, PA 19308 (US)
(74) Representative: Herzog, Fiesser & Partner Patentanwälte PartG mbB

(56) References cited:
- WO-A1-00/47399
- WO-A1-03/016413
- WO-A1-2010/009213
- GB-A- 1 538 202
- US-A- 3 975 201
- US-A- 4 369 220
- US-A- 4 377 642

## Description

### Field of the Invention

The invention is directed to a sealing glass composition used in the manufacture of fuel cell assemblies. The invention is also directed to a method of applying a sealing glass composition comprising an organic vehicle to an underlying substrate using a decal screen printing technique.

### Background of the Invention

Fuel cells are devices which produce electricity by oxidizing a fuel material. Fuel cells are categorized by their electrolyte composition. Electrolytes are materials which contain charged ions. Solid oxide fuel cells, or "SOFCs", contain a solid oxide or ceramic electrolyte. SOFCs are advantageous because they are highly efficient, stable and inexpensive. However, they also operate under higher temperatures than other types of fuel cells, causing them to have various mechanical and chemical compatibility issues.

Generally, SOFCs are made up of various layers, which include ceramic materials. The ceramics become electrically and ionically active at very high temperatures (i.e., 500-1000°C). Reduction of oxygen into oxygen ions occurs at these elevated temperatures in the cathode of the fuel cell. The ions diffuse through the electrolyte to the anode, where they electrochemically oxidize the fuel. Two electrons (as well as water) are given off as a byproduct. These electrons then flow through the external circuitry, thereby conducting electricity.

Fuel cells can be assembled in a variety of structures. In a planar design, the electrolyte material is sandwiched between the electrodes, and the structure is assembled in flat stacks. Sealing materials are applied between the stacks to prevent fuel and oxidant mixing, as well as to electrically insulate the fuel cell layers. Typically, glass materials are used in sealing compositions because they are highly electrically insulating, and can provide a gas tight seal. To make it possible to disperse the glass or ceramic onto the fuel cell layers in the desired pattern, the glass is usually mixed with an organic vehicle. However, since the sealing glass is typically milled to fine particles, producing a sealing glass mixture with high solid content and still provides the desirable dispensing or printing characteristics is challenging. WO 2010/009213 A1 relates to hotmelt sealing glass compositions, but does not address this challenge. Other works related to compositions comprising glass particles/powders include; US 4377642 A; US 3975201 A; US 4369220 A; WO 00/47399 A1; and GB 1538202 A. WO 03/016413 A1 discloses a decorative coating composition for use on glass. However, none of these documents address the need for a sealing glass composition that can be easily deposited onto a fuel cell layer or substrate. A sealing glass compositionwhich is optimized such that it can be easily deposited onto the fuel cell layers or substrates using a decal transfer or syringe dispensing technique is desired.

### Summary of the Invention

Accordingly, the invention relates to a sealing glass composition, said sealing glass composition comprising an organic vehicle for dispensing glass or ceramic powder comprising an acrylic resin component of average molecular weight of 20 - 210 KDa, and an organic solvent.

According to one aspect of the invention, the acrylic resin component is 0.1-50 wt. % of vehicle, preferably 5-40 wt. % of vehicle, most preferably 15-40 wt. % of vehicle.

According to another aspect of the invention, the solvent is 50-99 wt. % of vehicle, preferably 60-80 wt. % of vehicle, most preferably 60-70 wt. % of vehicle.

According to a further aspect of the invention, the acrylic resin component comprises n-butyl methacrylate polymer resin. In a particular embodiment, the acrylic resin component comprises n-butyl methacrylate polymer resin of average molecular weight of 20 - 40 KDa.

According to an additional aspect of the invention, the acrylic resin component comprises isobutyl methacrylate polymer resin. In a particular embodiment, the acrylic resin component comprises isobutyl methacrylate polymer resin of average molecular weight of 125 - 205 KDa.

The invention also provides a sealing glass composition comprising 30-95 wt. % of total sealing glass composition glass or ceramic particles, and 5-60 wt. % of total sealing glass composition an organic vehicle including an acrylic resin component and a solvent.

According to one aspect of the invention, the acrylic resin is of average molecular weight of 20 - 210 KDa.

According to another aspect of the invention, the acrylic resin component is about 10-50 wt. % of vehicle, preferably about 20-40 wt. % of vehicle, most preferably about 30 wt. % of vehicle.

According to a further aspect of the invention, the solvent is about 50-90 wt. % of vehicle, preferably about 60-80 wt. % of vehicle, most preferably about 70 wt. % of vehicle. According to an additional aspect of the invention, the acrylic resin component comprises n-butyl methacrylate resin. In a particular embodiment, the acrylic resin component comprises n-butyl methacrylate polymer resin of average molecular weight of 20 - 40 KDa.

According to yet another aspect of the invention, the acrylic resin component comprises isobutyl methacrylate resin. In a particular embodiment, the acrylic resin component comprises isobutyl methacrylate resin of average molecular weight of 125 - 205 KDa.

The invention also provides a method of applying a sealing glass composition to a substrate comprising the steps of providing a supporting sheet having a front surface coated with a releasing agent, depositing a sealing glass composition onto said front surface of said supporting sheet according to a pre-determined pattern, drying said sealing glass composition to form a sealing glass composition decal, removing said sealing glass composition decal from the front surface of said supporting sheet, and placing said dried sealing glass composition decal onto a metal substrate. In one embodiment, the depositing of the sealing glass composition onto the supporting sheet is by screen printing.

Other objects, advantages and salient features of the invention will become apparent from the following detailed description, which, taken in conjunction with the annexed drawings, discloses a preferred embodiment of the invention.

In particular, the invention is defined by the sealing glass composition of claims 1 to 12 and the methods of applying it according to claim 13 to 16.

### Brief Description of the Drawings

A more complete appreciation of the invention and many of the attendant advantages thereof will be readily obtained as the same becomes better understood by reference to the following detailed description when considered in connection with the accompanying drawings, wherein:
FIG. 1A is a top view of exemplary sealing glass paste printed in a pattern on a supporting sheet;
FIG. 1B is a cross section view of the exemplary sealing glass paste printed in a pattern on a supporting sheet as shown in FIG. 1A;
FIG. 2 is a cross-sectional view of illustrative stack of fuel cell layers and sealing glass composition; and
FIG. 3 illustrates a top view of an exemplary fuel cell layer mounted on a metal substrate with sealing glass composition dispensed according to a pattern on the metal substrate.

### Detailed Description of the Exemplary Embodiments

The invention is directed to a sealing glass composition, said sealing glass composition comprising an organic vehicle for dispensing glass or ceramic particles. Such an organic vehicle may be incorporated into a sealing glass composition used in the formation of fuel cell structures. A desired vehicle for this application has certain characteristics that allow the sealing glass composition to be easily applied to the underlying substrate using a decal transferring or syringe dispensing method.

### Organic Vehicle

One aspect of the invention is an organic vehicle for dispensing glass or ceramic particles. Glass or ceramic particles are useful in any number of electronic applications because of their insulative properties. To be able to apply these particles to the desired area of a substrate, they are usually mixed with an organic vehicle in order to "wet" the particles, forming a sealing glass composition, such that they can be applied to the underlying substrate.

According to one embodiment of the invention, the organic vehicle comprises an acrylic resin component and a solvent. The acrylic resin may be any substance derived from ethyl acrylate, methyl acrylate, butyl acrylate, 2-ethylhexyl acrylate, acrylic acid, methyl methacrylate, isobutyl methacrylate, ethyl methacrylate, n-butyl methacrylate, isobornyl methacrylate, t-butyl methacrylate, lauryl methacrylate, methacrylic acid, hydroxyethyl methacrylate, hydroxypropyl methacrylate, diethylaminoethyl methacrylate or other related compounds, including, esters of acrylic or methacrylic acid, or acrylonitrile. These compounds can chemically react with other monomers via the vinyl group to form polymer acrylic resin. The acrylic resin is typically a homo-polymer, and may also be co-polymers of the above mentioned monomers.

The presence of the acrylic resin is preferred in that it provides the necessary viscosity of a sealing glass composition to allow it to be deposited onto a fuel cell substrate. Further, the acrylic resin allows the printed or dispensed film of the sealing glass composition to retain its shape and flexibility when dried. This characteristic makes it possible for the printed or dispensed sealing glass composition to be formed into a decal when dried, which may be lifted from a supporting sheet coated with a releasing agent. The organic vehicle comprises 0.1-50 wt. % total acrylic resin, preferably 5-40 wt. % acrylic resin, and most preferably 20-35 wt. % acrylic resin. The resin may be pre-diluted in a determined amount of solvent, 50-90%, or it may be added directly to the other components of the sealing composition. In a preferred embodiment, the organic vehicle comprises butyl methacrylate resins, for example, isobutyl methacrylate resins, or n-butyl methacrylate resins. In a further embodiment, the organic vehicle comprises a mixture of acrylic resins, for example mixture of isobutyl methacrylate resins and n-butyl methacrylate resins, or acrylic resins of different molecular weight. Where the organic vehicle comprises two different resins, the organic vehicle may comprise 1-40 wt. % (of vehicle) a first acrylic resin and 1-40 wt. % (of vehicle) a second acrylic resin. More preferably, the organic vehicle comprises 5-30 wt. % of each resin, and most preferably the organic vehicle comprises 10-25 wt. % of each resin.

The acrylic resin polymer is typically of average molecular weight 10 - 300 KDa, more preferably 20 - 210 KDa. One exemplary acrylic resin polymer is an n-butyl methacrylate resin of average molecular weight 20-40 KDa, which typically having a Tg of 40-60°C. Another exemplary acrylic resin polymer is an isobutyl methacrylate resin of average molecular weight 125 -155 KDa, which typically having a Tg of 15-25°C. A further exemplary acrylic resin polymer is an isobutyl methacrylate resin of average molecular weight 175 - 205 KDa, which typically having a Tg of 40-60°C. These exemplary acrylic resins may be used alone or in combination as a mixture or blend in a sealing glass composition. When used as a binary mixture or blend, the exemplary acrylic resins are typically used in comparable amounts, such as in 1:10 to 10:1 ratios, more preferably 1:5 to 5:1 ratios, or more preferably 1:3 to 3:1 ratios.

The organic vehicle also comprises solvent, which provides a number of important functions, including improving viscosity, rheology, dispensability, printability, and contact properties of the sealing glass composition. Any solvent known to one skilled in the art that is compatible with (i.e., can effectively dissolve) acrylic resins may be used. Common solvents may be any of aromatic solvents, carbitol, terpineol, hexyl carbitol, texanol, butyl carbitol, butyl carbitol acetate, or dimethyladipate or glycol ethers. The solvent makes up approximately 30-99 wt. % of vehicle, preferably 35-80 wt. % of vehicle, and most preferably 40-70 wt. % of vehicle. The solvent may be incorporated with the acrylic resins, or the solvent may be added directly to the sealing composition.

According to another embodiment, the organic vehicle may further comprise surfactant(s) and/or thixotropic agent(s). These components also contribute to the viscosity, printability and contact properties of the sealing composition. All surfactants which are known to the person skilled in the art, and which are considered to be suitable in the context of this invention, may be employed as the surfactant in the organic vehicle. Preferred surfactants in the context of the invention are those based on linear chains, branched chains, aromatic chains, fluorinated chains, siloxane chains, polyether chains and combinations thereof. Preferred surfactants are single chained, double chained or poly chained. Preferred surfactants according to the invention may be nonionic, anionic, cationic, amphiphilic, or zwitterionic. Preferred surfactants are polymeric and monomeric or a mixture thereof. Preferred surfactants according to the invention can have pigment affinic groups, preferably hydroxyfunctional carboxylic acid esters with pigment affinic groups (e.g., DISPERBYK®-108, manufactured by BYK USA, Inc.), DISPERBYK®-110 (manufactured by BYK USA, Inc.), acrylate copolymers with pigment affinic groups (e.g., DISPERBYK®-116, manufactured by BYK USA, Inc.), modified polyethers with pigment affinic groups (e.g., TEGO® DISPERS 655, manufactured by Evonik Tego Chemie GmbH), other surfactants with groups of high pigment affinity (e.g., TEGO® DISPERS 662 C, manufactured by Evonik Tego Chemie GmbH). Other preferred polymers according to the invention not in the above list are polyethyleneglycol and its derivatives, and alkyl carboxylic acids and their derivatives or salts, or mixtures thereof. The preferred polyethylene glycol derivative according to the invention is poly (ethyleneglycol) acetic acid. Preferred alkyl carboxylic acids are those with fully saturated and those with singly or poly unsaturated alkyl chains or mixtures thereof. Preferred carboxylic acids with saturated alkyl chains are those with alkyl chains lengths in a range from 8 to 20 carbon atoms, preferably C₉H₁₉COOH (capric acid), C₁₁H₂₃COOH (Lauric acid), C₁₃H₂₇COOH (myristic acid) C₁₅H₃₁COOH (palmitic acid), C₁₇H₃₅COOH (stearic acid) or mixtures thereof. Preferred carboxylic acids with unsaturated alkyl chains are C₁₈H₃₄O₂ (oleic acid) and C₁₈H₃₂O₂ (linoleic acid). The preferred monomeric surfactant according to the invention is benzotriazole and its derivatives. The surfactant may be present in an amount of 0 to 10 weight % of organic vehicle, preferably 0-8 wt. %, and more preferably 0.01-6 wt.%.

Thixotropic agent prevents the sealing composition from excessive spreading when deposited on a substrate surface. This is helpful in achieving desired film thickness. Any thixotropic agent known to one skilled in the art that is compatible with the solvent and resin system may be used. Preferred thixotropic agents in this context are carboxylic acid derivatives, preferably fatty acid derivatives or combinations thereof. Preferred fatty acid derivatives are C₉H₁₉COOH (capric acid), C₁₁H₂₃COOH (Lauric acid), C₁₃H₂₇COOH (myristic acid) C₁₅H₃₁COOH (palmitic acid), C₁₇H₃₅COOH (stearic acid) C₁₈H₃₄O₂ (oleic acid), C₁₈H₃₂O₂ (linoleic acid) or combinations thereof. A preferred combination comprising fatty acids in this context is castor oil. Additional preferred thixotropic agents include, Thixatrol ® ST, Thixatrol ® PLUS, and Thixatrol ® MAX (manufactured by Elementis Specialties, Inc.). These components may be incorporated with the solvent and/or solvent/resin mixture, or they may be added directly into the sealing composition. The thixotropic agent may be 0.1-2 wt. % of sealing glass composition, preferably 0.5-1.5% wt. % of sealing glass composition.

The organic vehicle may also comprise additives which are distinct from the aforementioned organic vehicle components, and which contribute to favorable properties of the sealing glass composition, such as advantageous viscosity, dispensability, and printability. All additives known to the person skilled in the art, and which are considered to be suitable in the context of the invention, may be employed as additives in the organic vehicle. Preferred additives according to the invention are viscosity regulators, stabilizing agents, inorganic additives, thickeners, emulsifiers, dispersants, plasticizers or pH regulators.

Plasticizers are additives that increase the plasticity or fluidity of a material. Commonly, ester plasticizers may be used, which may include sebacates, adipates, terephthalates, dibenzoates, glutarates, phthalates, azelates, and other blends. Phthalate plasticizers may include: Bis(2-ethylhexyl) phthalate (DEHP), Diisononyl phthalate (DINP), Di-n-butyl phthalate (DnBP, DBP), Butyl benzyl phthalate (BBzP), Diisodecyl phthalate (DIDP), Di-n-octyl phthalate (DOP or DnOP), Diisooctyl phthalate (DIOP), Diethyl phthalate (DEP), Diisobutyl phthalate (DIBP), Di-n-hexyl phthalate, or mixture thereof. Trimellitates plasticizers may include: Trimethyl trimellitate (TMTM), Tri-(2-ethylhexyl) trimellitate (TEHTM-MG), Tri-(n-octyl,n-decyl) trimellitate (ATM), Tri-(heptyl,nonyl) trimellitate (LTM), n-octyl trimellitate (OTM), or mixture thereof. Adipates, sebacates, and maleates based plasticizers may include: Bis(2-ethylhexyl)adipate (DEHA), Dimethyl adipate (DMAD), Monomethyl adipate (MMAD), Dioctyl adipate (DOA), Dibutyl sebacate (DBS), Dibutyl maleate (DBM), Diisobutyl maleate (DIBM). Plasticizers may be included in the range of 0.01-10 wt. % of sealing compositions, more preferably 0.5-8 wt. % of sealing compositions.

When incorporated into a sealing composition for a fuel cell assembly, the organic vehicle may make up 1-50 wt. % of the composition, more preferably 10-40 wt. % of composition, and most preferably 15-30 wt. % of composition.

### Sealing Glass Composition

According to one embodiment, a sealing composition comprises glass or ceramic particles and the organic vehicle of the invention. The glass and/or ceramic particles give the sealing composition the necessary electrical insulation and stability at elevated operating temperatures. The sealing glass composition is typically applied between layers of fuel cell components, e.g., ceramic electrodes or electrolyte layers braised onto a metal frame. When assembled, the layered structure is typically compressed under heat and subsequently subject to high heat, i.e., firing. After firing, the sealing glass composition fuses and bond with the fuel cell layers forming a gas tight seal. In a preferred embodiment, the sealing composition comprises fine glass powder. The powder may be 30-95 wt. % of total sealing composition, preferably 45-90 wt. %, most preferably 50-90 wt. %. Glass and ceramic materials used for sealing compositions are known to one skilled in the art, and any suitable glass or ceramic material may be used according to the invention. Typically, considering the high operating temperature of a SOFC, sealing glass of relatively high Tg is considered for this application. Sealing glass may contain lead oxide or may be lead free, preferably lead-free.

The sealing glass may comprise silicon oxide, boron oxide, barium oxide, aluminum oxide, or zirconium oxide, and any other oxides known to one skilled in the art. The sealing glass composition may also comprise other filler materials, such as refractory oxides or ceramics. The sealing composition may comprise 5-50 wt. % oxides or other compounds, more preferably 10-40 wt. %, most preferably 20-30 wt. %. Suitable oxides or compounds for use in sealing compositions are known to one skilled in the art and include oxides or other compounds of silicon, boron, aluminum, bismuth, lithium, sodium, magnesium, zinc, titanium, zirconium, or phosphorous.

The glass powder may be milled, such as in a ball mill or jet mill, until a fine powder results. Typically, the inorganic reaction system may be milled to an average particle size of 1-50µm, preferably 5-20µm.

### Formation of Sealing Glass Composition

To form a sealing composition, the organic vehicle of the invention is combined with the solid glass or ceramic powder, and any other additives, using any method known in the art for preparing a sealing composition. The method of preparation is not critical, as long as it results in a homogenously dispersed composition. The components can be mixed, such as with a mixer, then passed through a three roll mill, for example, to make a dispersed uniform composition.

### Application of Sealing Glass Composition to Substrate

The sealing glass composition having the organic vehicle of the invention may be applied to a fuel cell substrate in any pattern or shape that is known to one skilled in the art, as long as it forms the necessary seal between the fuel cell layers. The composition may be applied using any method known to one skilled in the art, including impregnation, dipping, pouring, injection, syringe dispensing, spraying, knife coating, curtain coating, brush or printing, or a combination of at least two thereof. Preferred application methods are screen printing and syringe dispensing, or a combination thereof.

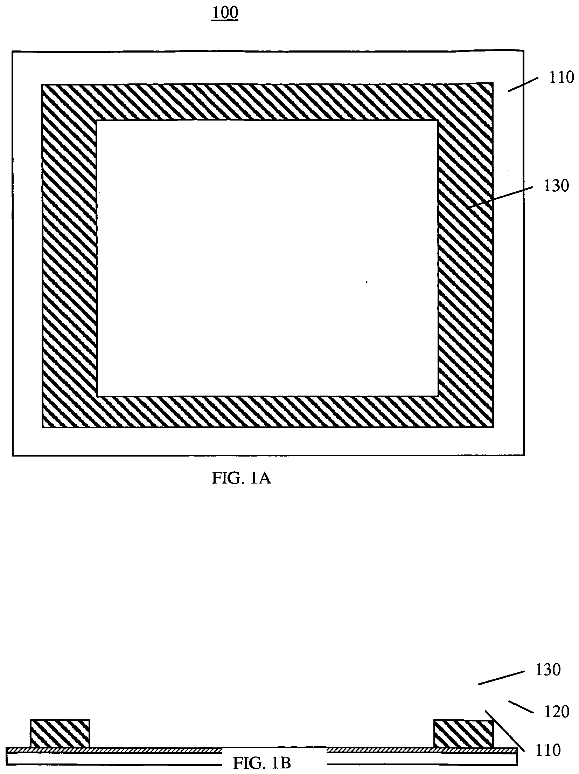

According to one embodiment of the invention, the composition may be applied to the substrate using a decal transferring technique. Specifically, the composition may be first screen printed onto the front surface of a releasable supporting sheet, such as a sheet of biaxially-oriented polyethylene terephthalate polymer (PET, commonly manufactured under the trade name Mylar®). FIG. 1A and 1B illustrate an exemplary sealing glass composition printed in a pattern 130 on a supporting sheet 110. The supporting sheet 110 may comprise a coating of a releasing agent 120, which allows the sealing composition 130 to be released from the supporting sheet 110. There are a number of commercially available releasing agents known to one skilled in the art suitable for such applications. An exemplary commercially available supporting sheet with a releasing agent coating may be obtained from Saint-Gobain (TM-113, 0.003" white PET 8752 sheet). The sealing composition is first screen printed into the desired pattern 130 on the supporting sheet 110 on the surface coated with the releasing agent 120. To achieve the desired thickness of the pattern, this screen printing process may be repeated two or more times. The thickness of the printed sealing composition pattern may be 0.254 mm - 2.54 mm (10-100 mil), preferably 0.508 mm - 1.524 mm (20-60 mil). It is preferred according to the invention that the screens have mesh opening with a size in a range from 20 to 100 µm, more preferably in a range from 30 to 80 µm, and most preferably in a range from 40 to 70 µm. The printed pattern may be heated to 80-180°C in order to dry the sealing composition after each printing. Once the desired pattern and thickness are achieved, the sealing paste printed onto the supporting sheet maybe further dried to form a decal, which may be peeled from the supporting sheet.

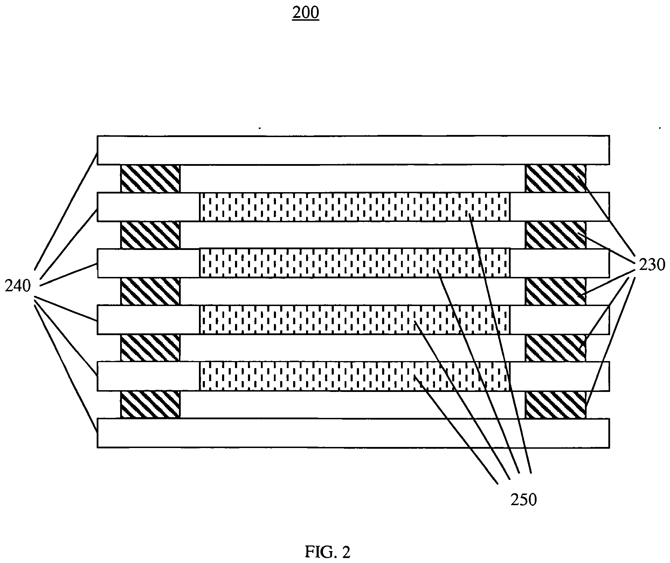

FIG 2 illustrates an exemplary stack of alternating fuel cell layers 250 mounted on metal substrate frames 240 and sealing glass composition decal 230. A typical fuel cell layer 250 is a sandwiched structure of electrodes deposited on either side of a ceramic electrolyte layer, which is mounted on a metal frame substrate 240. The sealing glass composition decal 230 may be placed onto a first fuel cell layer 250 and metal substrate frame 240. The sealing glass composition decal 230 is then compressed against the metal substrate 240. A second fuel cell layer 250 and metal substrate can then be placed on the sealing glass composition decal 230. Another sealing glass composition decal 230 then may be placed atop the second fuel cell layer 250 and metal substrate 240. This process may be repeated until desired number of layers is achieved. The decal transfer may be completed manually or automatically. The fuel cell layers 250 metal substrates 240 and sealing glass composition decal 230 thus form an alternating stack 200, which is then compressed under heat and fired to form a finished fuel cell assembly.

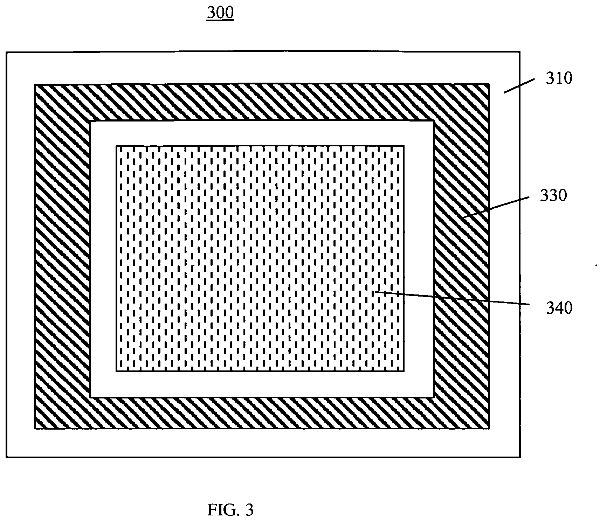

Another preferred method of applying the sealing glass composition is by dispensing, e.g., through a syringe or other dispensing devices similar in nature. The sealing glass composition is typically loaded into a syringe and pushed through a tip or nozzle with a defined shape and size onto a metal substrate. For a sealing glass composition to be able to be applied using a syringe, the viscosity is typically between about 800-1400 Pa·s (800-1400 Kpcs), preferably 1000-1300 Pa·s (1000-1300 Kcps). A bead of the sealing glass composition is deposited onto a fuel cell layer and metal substrate, and dried at 80-180°C. Fuel cell layers of is then sandwiched with a dried bead of sealing glass compositions between the layers. FIG. 3 illustrates an exemplary fuel cell layer 340 mounted on a metal substrate 310. Sealing glass composition 330 is dispensed according to a pattern on the metal substrate 310. The fuel layer stack is then compressed and fired to form a finished fuel cell assembly.

### Example 1

A first exemplary sealing glass composition ("Composition A") was prepared with about 21 wt. % (of total sealing glass composition) of organic vehicle, about 23 wt. % ball-milled fibrous oxide filler, and about 52 wt. % glass frit. In addition, the composition comprised about 1 wt. % of a thixotropic agent (THIXATROL® MAX, Elementis Specialties) and 3 wt. % of a plasticizer (a mixture of propanol, oxybis-dibenzoate), both of which were incorporated directly into Composition A.

The organic vehicle comprised approximately 35% resin component and about 65% solvent. The resin component comprised two different acrylic resins in equal parts, such that each type of resin was about 3.7 wt. % of total sealing composition. The first acrylic resin was an isobutyl methacrylate polymer resin, manufactured as Elvacite® 2044 (Lucite International). The second acrylic resin was an n-butyl methacrylate polymer resin, manufactured as PARALOID^{™} B-67 (The Dow Chemical Company).

The acrylic resins may be added to the sealing composition as a pre-diluted solution. For example, both acrylic resins may be dissolved in solvent and then combined with the remaining components of the sealing composition. In this particular example, both acrylic resins were pre-diluted in a texanol solvent and then combined with remaining components of Composition A.

Composition A was screen printed via a 250 µm nominal opening (60 mesh screen), with emulsion thickness of about 0.508 mm (20 mil) onto a supporting sheet coated with a releasing agent (Saint-Gobain, TM-113, 0.003" white PET 8752 sheet). Two or more rounds of printing are typically required to build up the deposited sealing glass composition film to the desired thickness. In this example, the first printed layer is dried at 125°C for 40 min, and subsequent printed layers were dried at 80°C for 40 min. After three rounds of printing and drying the printed sealing glass composition is subject to a final drying step at 180C for 15-20 min. The resulting dried sealing composition is flexible, which may be pealed from the supporting sheet as a decal without breaking, and retains its printed pattern and shape. The decal can then be placed between fuel cell layers, compressed, and fired to form a gas tight seal.

### Example 2

A second exemplary sealing glass composition ("Composition B") was prepared with about 21 wt. % (of sealing glass composition) of organic vehicle and about 75 wt. % glass frit. In addition, Composition B comprised about 1 wt. % of a thixotropic agent (THIXATROL® MAX, Elementis Specialties) and 3 wt. % of a plasticizer (Dibutyl phthalate, DBP), both of which were incorporated directly into Composition B. The organic vehicle used comprising two isobutyl methacrylate polymer resins of roughly equal parts. The first acrylic resin is about 2.5 wt. % of Elvacite 2044 (Lucite International). The second acrylic resin is about 2.5 wt. % of Elvacite 2045 (Lucite International).

Composition B was formulated and tested using syringe dispensing method.

### Example 3

A third exemplary sealing glass composition ("Composition C") was prepared with about 81. wt. % (of sealing glass composition) of glass frit and about 19 wt. % organic vehicle. The organic vehicle comprised approximately 35% resin component and about 65% solvent.

The resin component comprised two different acrylic resins. The first acrylic resin was an isobutyl methacrylate polymer resin (Elvacite® 2044). The second acrylic resin was a n-butyl methacrylate polymer resin (PARALOID^{™} B-67). The organic vehicle of Composition C comprised about 17.5 % of the Elvacite® 2044 acrylic resin and about 17.5 % of the PARALOID^{™} B-67 acrylic resin. In this particular example, both acrylic resins were pre-diluted in a texanol solvent and then combined with remaining components of Composition C.

This viscosity of Composition C was then tested to ensure its compatibility with a syringe application method. In this method, the composition is applied directly to the fuel cell metal substrate, in any desired pattern, by pumping it from a syringe. Composition C is applied to the metal substrate through a18 gauge, 0.8382 mm (0.033 inch) tip. The viscosity is tested by using a Brookfield® viscometer at a suitable speed. Composition C exhibited a viscosity of about 1420 Pa·s (1420 Kcps). When fired, glass seal formed by Composition C exhibited good film density and low porosity.

### Example 4

A fourth exemplary sealing glass composition ("Composition D") was prepared with about 80 wt. % (of sealing glass composition) of glass frit and about 20 wt. % organic vehicle. The organic vehicle comprised approximately 26% acrylic resin and about 74 % solvent. In this example, about equal amount of two isobutyl methacrylate polymer resins (Elvacite® 2044 and 2045) were used. The acrylic resin was pre-diluted in a texanol solvent and then combined with remaining components of Composition D. About 0.5 wt. % of a surfactant (Byk-110) is also incorporated.

The viscosity of Composition D was then tested to ensure its compatibility with a syringe application method, using the testing methods as set forth in Example 3. Composition D exhibited a viscosity of about 1060 Pa·s (1060 Kcps), which is within the desired viscosity range. When fired, glass seal formed by Composition D exhibited good film density and low porosity.

### Example 5

A fifth exemplary sealing glass composition ("Composition E") was prepared with about 81 wt. % (of sealing glass composition) of glass frit and about 19 wt. % organic vehicle. The organic vehicle comprised approximately 35% resin component and about 65% solvent.

The resin component comprised two different acrylic resins. The first acrylic resin was an isobutyl methacrylate polymer resin (Elvacite® 2044). The second acrylic resin was a n-butyl methacrylate polymer resin (PARALOID^{™} B-67). The organic vehicle of Composition E comprised about 17.5 % of the Elvacite® 2044 acrylic resin and about 17.5 % of the PARALOID^{™} B-67 acrylic resin. In this particular example, both acrylic resins were pre-diluted in a texanol solvent and then combined with remaining components of Composition E also incorporated about 0.1% surfactant (Byk-110).

This viscosity of Composition E was then tested to ensure its compatibility with a syringe application method, using the testing methods as set forth in Example 3. Composition E exhibited a viscosity of about 1230 Pa·s (1230 Kcps). When fired, glass seal formed by Composition E exhibited good film density and low porosity.

These and other advantages of the invention will be apparent to those skilled in the art from the foregoing specification. Accordingly, it will be recognized by those skilled in the art that changes or modifications may be made to the above described embodiments without departing from the broad inventive concepts of the invention. Specific dimensions of any particular embodiment are described for illustration purposes only.

## Claims

1. A sealing glass composition comprising:
30-95 wt. % of total sealing glass composition glass or ceramic particles; and
5-60 wt. % of total sealing glass composition an organic vehicle comprising an acrylic resin component and a solvent, wherein the sealing glass composition viscosity is between 800-1400 Pa.s (800-1400 Kcps).

2. The sealing glass composition according to claim 1, wherein said acrylic resin is of average molecular weight of 20-210 KDa.

3. The sealing glass composition according to claims 1-2, wherein said acrylic resin component is 10-50 wt. % of vehicle.

4. The sealing glass composition according to claims 1-3, wherein said solvent is 50-90 wt. % of vehicle.

5. The sealing glass composition according to claims 1-4, wherein said acrylic resin component comprises n-butyl methacrylate resin.

6. The sealing glass composition according to claims 1-5, wherein said acrylic resin component comprises n-butyl methacrylate polymer resin of average molecular weight of 20 - 40 KDa.

7. The sealing glass composition according to claims 1-6, wherein said acrylic resin component comprises isobutyl methacrylate resin.

8. The sealing glass composition according to claims 1-7, wherein said acrylic resin component comprises isobutyl methacrylate resin of average molecular weight of 125-205 KDa.

9. The sealing glass composition according to claims 1-8, wherein said acrylic resin component comprises n-butyl methacrylate resin and isobutyl methacrylate resin.

10. The sealing glass composition according to claims 1-9, wherein said solvent is texanol or terpineol.

11. The sealing glass composition according to claims 1-10, wherein said organic vehicle further comprises a thixotropic agent.

12. The sealing glass composition according to claims 1-11, wherein said organic vehicle further comprises a plasticizer.

13. A method of applying a sealing glass composition according to any of claims 1-12, to a substrate comprising the steps of:
providing a supporting sheet having a front surface coated with a releasing agent;
depositing a sealing glass composition onto said front surface of said supporting sheet according to a pre-determined pattern;
drying said sealing glass composition to form a sealing glass composition decal;
removing said sealing glass composition decal from the front surface of said supporting sheet; and
placing said dried sealing glass composition decal onto a metal substrate.

14. The method of applying a sealing glass composition to a substrate according to claim 13, wherein said depositing said sealing glass composition onto said front surface of said supporting sheet is by screen printing.

15. The method of applying a sealing glass composition to a substrate according to claims 13-14, further comprising the steps of:
forming an alternating assembly of metal substrate and sealing glass composition; and
compress said assembly.

16. A method of applying a sealing glass composition, according to any of claims 1-12, to a substrate comprising the steps of:
loading a sealing glass composition into a syringe having a tip or nozzle having a defined shape and size;
pushing the sealing glass composition through the tip or nozzle onto a metal substrate.

## Patentansprüche

1. Dichtungsglaszusammensetzung, umfassend:
30-95 Gew.% der gesamten Dichtungsglaszusammensetzung an Glas- oder Keramikpartikeln und
5-60 Gew.% der gesamten Dichtungsglaszusammensetzung an organischem Vehikel, das eine Acrylharzkomponente und ein Lösungsmittel umfasst, wobei die Viskosität der Dichtungsglaszusammensetzung zwischen 800 und 1400 Pa·s (zwischen 800 und 1400 Kcps) liegt.

2. Dichtungsglaszusammensetzung nach Anspruch 1, wobei das Acrylharz ein durchschnittliches Molekulargewicht von 20-210 kDa aufweist.

3. Dichtungsglaszusammensetzung nach den Ansprüchen 1-2, wobei die Acrylharzkomponente 10-50 Gew.% des Vehikels ist.

4. Dichtungsglaszusammensetzung nach den Ansprüchen 1-3, wobei das Lösungsmittel 50-90 Gew.% des Vehikels ist.

5. Dichtungsglaszusammensetzung nach den Ansprüchen 1-4, wobei die Acrylharzkomponente n-Butylmethacrylatharz umfasst.

6. Dichtungsglaszusammensetzung nach Anspruch 1-5, wobei die Acrylharzkomponente n-Butylmethacrylatpolymerharz mit einem durchschnittlichen Molekulargewicht von 20-40 kDa umfasst.

7. Dichtungsglaszusammensetzung nach den Ansprüchen 1-6, wobei die Acrylharzkomponente Isobutylmethacrylatharz umfasst.

8. Dichtungsglaszusammensetzung nach Anspruch 1-7, wobei die Acrylharzkomponente Isobutylmethacrylatharz mit einem durchschnittlichen Molekulargewicht von 125-205 kDa umfasst.

9. Dichtungsglaszusammensetzung nach den Ansprüchen 1-8, wobei die Acrylharzkomponente n-Butylmethacrylatharz und Isobutylmethacrylatharz umfasst.

10. Dichtungsglaszusammensetzung nach den Ansprüchen 1-9, wobei das Lösungsmittel Texanol oder Terpineol ist.

11. Dichtungsglaszusammensetzung nach den Ansprüchen 1-10, wobei das organische Vehikel ferner ein thixotropes Mittel umfasst.

12. Dichtungsglaszusammensetzung nach den Ansprüchen 1-11, wobei das organische Vehikel ferner ein Plastifizierungsmittel umfasst.

13. Verfahren zum Aufbringen einer Dichtungsglaszusammensetzung nach einem der Ansprüche 1-12 auf ein Substrat, umfassend die folgenden Schritte:
Bereitstellen einer Trägerlage mit einer Vorderfläche, die mit einem Trennmittel beschichtet ist;
Absetzen einer Dichtungsglaszusammensetzung auf der Vorderfläche der Trägerlage gemäß einem vorbestimmten Muster;
Trocknen der Dichtungsglaszusammensetzung, um ein Dichtungsglaszusammensetzungsabziehbild zu bilden;
Entfernen des Dichtungsglaszusammensetzungsabziehbildes von der Vorderfläche der Trägerlage und
Platzieren des getrockneten Dichtungsglaszusammensetzungsabziehbildes auf einem Metallsubstrat.

14. Verfahren zum Auftragen einer Dichtungsglaszusammensetzung auf ein Substrat nach Anspruch 13, wobei das Absetzen der Dichtungsglaszusammensetzung auf der Vorderfläche der Trägerlage durch Siebdruck erfolgt.

15. Verfahren zum Aufbringen einer Dichtungsglaszusammensetzung auf ein Substrat nach den Ansprüchen 13-14, ferner umfassend die folgenden Schritte:
Bilden einer alternierenden Zusammenstellung von Metallsubstrat und Dichtungsglaszusammensetzung; und
Komprimieren der Zusammenstellung.

16. Verfahren zum Aufbringen einer Dichtungsglaszusammensetzung nach einem der Ansprüche 1-12 auf ein Substrat, umfassend die folgenden Schritte:
Laden einer Dichtungsglaszusammensetzung in eine Spritze mit einer Spitze oder Düse, die eine definierte Form und Größe aufweist;
Drücken der Dichtungsglaszusammensetzung durch die Spitze oder Düse hindurch auf ein Metallsubstrat.

## Revendications

1. Composition de verre de scellement comprenant :
30 à 95 %, en poids de la composition totale de verre de scellement, de verre ou de particules de céramique ; et
5 à 60 %, en poids de la composition totale de verre de scellement, d'un véhicule organique comprenant un composant de type résine acrylique et un solvant, dans laquelle la viscosité de la composition de verre de scellement est comprise entre 800 et 1 400 Pa·s (800 et 1 400Kcps).

2. Composition de verre de scellement selon la revendication 1, dans laquelle ladite résine acrylique présente un poids moléculaire moyen de 20 à 210 KDa.

3. Composition de verre de scellement selon les revendications 1 et 2, dans laquelle le composant de type résine acrylique représente 10 à 50 % en poids du véhicule.

4. Composition de verre de scellement selon les revendications 1 à 3, dans laquelle ledit solvant représente 50 à 90 % en poids du véhicule.

5. Composition de verre de scellement selon les revendications 1 à 4, dans laquelle ledit composant de type résine acrylique comprend de la résine de méthacrylate de n-butyle.

6. Composition de verre de scellement selon les revendications 1 à 5, dans laquelle ledit composant de type résine acrylique comprend une résine à base d'un polymère de méthacrylate de n-butyle d'un poids moléculaire moyen de 20 à 40 KDa.

7. Composition de verre de scellement selon les revendications 1 à 6, dans laquelle ledit composant de type résine acrylique comprend de la résine de méthacrylate d'isobutyle.

8. Composition de verre de scellement selon les revendications 1 à 7, dans laquelle ledit composant de type résine acrylique comprend de la résine de méthacrylate d'isobutyle d'un poids moléculaire moyen de 125 à 205 KDa.

9. Composition de verre de scellement selon les revendications 1 à 8, dans laquelle ledit composant de type résine acrylique comprend de la résine de méthacrylate de n-butyle et de la résine de méthacrylate d'isobutyle.

10. Composition de verre de scellement selon les revendications 1 à 9, dans laquelle ledit solvant est le texanol ou le terpinéol.

11. Composition de verre de scellement selon les revendications 1 à 10, dans laquelle ledit véhicule organique comprend, en outre, un agent thixotrope.

12. Composition de verre de scellement selon les revendications 1 à 11, dans laquelle ledit véhicule organique comprend, en outre, un plastifiant.

13. Procédé d'application sur un substrat d'une composition de verre de scellement selon l'une quelconque des revendications 1 à 12, comprenant les étapes consistant :
à utiliser une feuille de support comportant une surface avant revêtue d'un agent anti-adhérent ;
à déposer une composition de verre de scellement sur ladite surface avant de ladite feuille de support selon un motif prédéterminé ;
à sécher ladite composition de verre de scellement pour former une décalcomanie à base de la composition de verre de scellement ;
à enlever ladite décalcomanie à base de la composition de verre de scellement de la surface avant de ladite feuille de support ; et
à placer ladite décalcomanie à base de la composition de verre de scellement séchée sur un substrat métallique.

14. Procédé d'application sur un substrat d'une composition de verre de scellement selon la revendication 13, dans lequel ledit dépôt de ladite composition de verre de scellement sur ladite surface avant de ladite feuille de support se fait par impression au cadre.

15. Procédé d'application sur un substrat d'une composition de verre de scellement selon les revendications 13 et 14, comprenant, en outre, les étapes consistant :
à former un assemblage où se superposent de manière alternante un substrat métallique et une composition de verre de scellement ; et
à comprimer ledit assemblage.

16. Procédé d'application sur un substrat d'une composition de verre de scellement, selon l'une quelconque des revendications 1 à 12, comprenant les étapes consistant :
à charger une composition de verre de scellement dans une seringue comportant un embout ou une buse d'une forme et d'une taille bien définies ;
à faire passer la composition de verre de scellement à travers l'embout ou la buse pour la déposer sur un substrat métallique.
